# EUROPÄISCHE PATENTANMELDUNG

(11) **EP 4 607 754 A2**
(43) Veröffentlichungstag der Anmeldung: **27.08.2025**
(21) Anmeldenummer: 25181827.4
(22) Anmeldetag: 05.12.2017
(51) Int. Cl.: H02J 13/00

(54) **VERFAHREN ZUM STEUERN EINES NETZWIEDERAUFBAUS**

(30) Priorität: 19.12.2016 DE 102016124840
(62) Teilanmeldung aus: 17811917.8
(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Steuern eines Netzwiederaufbaus eines elektrischen Versorgungsnetzes (120), wobei das elektrische Versorgungsnetz (120) einen ersten Netzabschnitt (302) und wenigstens einen weiteren Netzabschnitt (302) aufweist, an den ersten Netzabschnitt (302) wenigstens ein Windpark (304) angeschlossen ist, der Windpark (304) über eine Windparkleitwarte (320) ansteuerbar ist, der erste Netzabschnitt (302) über wenigstens eine Schalteinrichtung (340) mit dem wenigstens einen weiteren Netzabschnitt (342) gekoppelt ist, um elektrische Energie zwischen den Netzabschnitten (302, 342) zu übertragen, die wenigstens eine Schalteinrichtungen (340) dazu eingerichtet ist, in einem Fehlerfall den ersten Netzabschnitt (302) von dem wenigstens einen weiteren Netzabschnitt (342) zu trennen, eine Netzleitstelle vorgesehen ist, um die wenigstens eine Schalteinrichtung (342) zu steuern, wobei in einem Fehlerfall, in dem ein auf den ersten Netzabschnitt (302) wirkender Netzfehler auftritt, der erste Netzabschnitt (302) durch die wenigstens eine Schalteinrichtung (340) von dem wenigstens einen weiteren Netzabschnitt (342) getrennt wird, die Windparkleitwarte (320) mit der Netzleitstelle (324) über eine Leitwartenverbindung (326) Daten austauscht, wobei die Leitwartenverbindung (326) eine ausfallsichere Kommunikationsverbindung zwischen der Windparkleitwarte (320) und der Netzleitstelle (324) ist und unabhängig von dem elektrischen Versorgungsnetz (120) betreibbar ist, insbesondere auch bei dem Fehler im ersten Netzabschnitt (302) betreibbar ist, und der Windpark (304) Daten von der Netzleitstelle (324) über eine Windparkverbindung (328) erhält, wobei die Windparkverbindung (328) eine ausfallsichere Kommunikationsverbindung zwischen dem Windpark (304) und der Netzleitstelle (324) ist und unabhängig von dem elektrischen Versorgungsnetz (120) betreibbar ist, insbesondere auch bei dem Fehler im ersten Netzabschnitt (302) betreibbar ist, und weitere Daten, die nicht über die Leitwartenverbindung (326) und nicht über die Windparkverbindung (328) übertragen werden, über eine weitere Datenverbindung (322, 332) übertragen werden, sofern diese nicht ausgefallen ist.

## Beschreibung

Die vorliegende Erfindung betrifft ein Verfahren zum Steuern eines Netzwiederaufbaus eines elektrischen Versorgungsnetzes. Außerdem betrifft die vorliegende Erfindung eine Kommunikationseinrichtung zum Steuern eines Netzwiederaufbaus. Die Erfindung betrifft auch einen Windpark mit mehreren Windenergieanlagen, der bei einem solchen Verfahren zum Steuern eines Netzwiederaufbaus verwendet wird.

Ein elektrisches Versorgungsnetz kann aus mehreren Netzabschnitten zusammengesetzt sein. Tritt in einem Netzabschnitt eine Störung auf, die die Stabilität dieses Netzabschnitts gefährdet oder bereits schon zu einer Instabilität dieses Netzabschnitts geführt hat, so ist es zweckmäßig und regelmäßig auch vorgeschrieben, diesen Netzabschnitt vom übrigen elektrischen Versorgungsnetz zu trennen. Damit wird erreicht, dass die Störung nicht auch noch weitere Teile des elektrischen Versorgungsnetzes oder sogar das elektrische Versorgungsnetz insgesamt gefährdet. Grundsätzlich kommen aber auch andere Gründe für eine solche Abtrennung eines Netzabschnitts von dem übrigen elektrischen Versorgungsnetz in Betracht, wie bspw. Wartungs- oder Reparaturarbeiten. Dieser abgetrennte Netzabschnitt wird dabei auch regelmäßig nicht oder zumindest nicht in einem normalen Betriebsmodus betrieben.

Sobald die Störung oder ein anderer Grund für das Abtrennen dieses Netzabschnitts wieder weggefallen ist, sollte dieser Netzabschnitt sobald wie möglich wieder in einen normalen Betriebszustand versetzt und mit dem übrigen elektrischen Versorgungsnetz wieder zusammengeschaltet werden. Dieser Vorgang wird als Netzwiederaufbau bezeichnet. Ein Netzwiederaufbau bezeichnet also das Wiederhochfahren eines Netzabschnitts und das Wiederverbinden mit dem übrigen elektrischen Versorgungsnetz, insbesondere mit wenigstens einem weiteren benachbarten Netzabschnitt.

Ein solcher Vorgang eines Netzwiederaufbaus ist grundsätzlich bekannt und wird üblicherweise durch den Netzbetreiber koordiniert, der dazu besonders auch große in den betroffenen Netzabschnitt einspeisende Kraftwerke steuert und auch etwaige Schalteinrichtungen zum Trennen bzw. wieder Verbinden des betreffenden Netzabschnitts mit dem übrigen elektrischen Versorgungsnetz steuert. Ggf. kann der Netzbetreiber auch große Verbraucher oder zumindest Anschlussschnittstellen zu solchen Verbrauchern steuern.

Mit einem zunehmenden Anteil dezentraler Erzeugungseinheiten, insbesondere Photovoltaikanlagen und Windenergieanlagen, besonders Windparks, nimmt nun aber die Anzahl und/oder Dominanz großer Kraftwerke im elektrischen Versorgungsnetz ab.

Entsprechend müssen solche Windparks im Falle eines Netzwiederaufbaus zumindest in die Überlegungen dieses Netzwiederaufbaus mit eingebunden werden. Für den Netzbetreiber ist eine solche Aufgabe aber mitunter nicht leicht zu lösen, weil zum einen durch den schwindenden Anteil von Großkraftwerken auch seine Steuermöglichkeiten, auf die er unmittelbar Zugriff hat, schwinden. Zum anderen reagieren solche dezentralen Erzeugungseinheiten, insbesondere Windenergieanlagen auch in vielerlei Hinsicht anders, als es der Netzbetreiber von Großkraftwerken oder zumindest großen Kraftwerken gewohnt ist. Hier ist als ein Problem besonders zu nennen, dass jeweils aktuelle Einspeisekapazitäten eines Windparks maßgeblich vom Wetter abhängen, worauf der Netzbetreiber keinen Einfluss hat.

Das Deutsche Patent- und Markenamt hat in der Prioritätsanmeldung zu vorliegender Anmeldung folgenden Stand der Technik recherchiert: DE 10 2007 035 391 A1, DE 10 2007 049 251 A1, US 2008/0118354 A1, US 2014/0297206 A1, EP 1 993 184 A1 und CN 105 846 462 A.

Der vorliegenden Erfindung liegt somit die Aufgabe zugrunde, zumindest eines der genannten Probleme zu adressieren. Insbesondere soll eine Lösung vorgeschlagen werden, einen Netzwiederaufbau eines elektrischen Versorgungsnetzes unter Zuhilfenahme wenigstens eines Windparks, der an dieses elektrisches Versorgungsnetz angeschlossen ist, zu verbessern. Zumindest soll eine Lösung vorgeschlagen werden, Besonderheiten eines Windparks bei einem Netzwiederaufbau berücksichtigen zu helfen. Zumindest soll gegenüber bisher bekannten Lösungen eine alternative Lösung vorgeschlagen werden.

Erfindungsgemäß wird ein Verfahren nach Anspruch 1 vorgeschlagen. Dieses Verfahren betrifft das Steuern eines Netzwiederaufbaus eines elektrischen Versorgungsnetzes. Das hierbei zu steuernde elektrische Versorgungsnetz weist zumindest einen ersten und wenigstens einen weiteren Netzabschnitt auf. An den ersten Netzabschnitt ist wenigstens ein Windpark angeschlossen und der Windpark ist über eine Windparkleitwarte ansteuerbar.

Grundsätzlich können aber auch an dem wenigstens einen weiteren Netzabschnitt und auch an dem übrigen elektrischen Versorgungsnetz weitere Windparks angeschlossen sein. In dem ersten Netzabschnitt können auch mehrere Windparks angeschlossen sein. Die Windparkleitwarte ist insoweit nicht oder zumindest nicht zwingend Teil des Windparks des ersten Netzabschnitts, kann ihn aber ansteuern. Die Windparkleitwarte kann auch weitere Windparks, zumindest sofern sie in der Nähe angeordnet sind, ansteuern. Die Windparkleitwarte ist insoweit eine zentrale Steuereinheit, die mehreren Windparks übergeordnet ist. Grundsätzlich kann sie aber auch nur einen einzigen Windpark ansteuern.

Der erste Netzabschnitt, an den also der Windpark angeschlossen ist, ist über wenigstens eine Schalteinrichtung mit dem wenigstens einen weiteren Netzabschnitt gekoppelt. Über diese Schalteinrichtung kann elektrische Energie zwischen diesen Netzabschnitten übertragen werden. Weiterhin ist die wenigstens eine Schalteinrichtung dazu eingerichtet, in einem Fehlerfall den ersten Netzabschnitt von dem wenigstens einen weiteren Netzabschnitt zu trennen. Ein solcher Fehlerfall kann auf allgemein als Ereignis bezeichnet werden. Die Schalteinrichtung trennt dann also mit anderen Worten den ersten Netzabschnitt vom übrigen elektrischen Versorgungsnetz.

Zum Steuern dieser wenigstens einen Schalteinrichtung ist eine Netzleitstelle vorgesehen. Eine solche Netzleitstelle wird üblicherweise vom Netzbetreiber kontrolliert und sie kann weitere Schalteinrichtungen steuern. Auch hier kommt grundsätzlich in Frage, dass sie nur eine Schalteinrichtung steuert, wenn bspw. in der Netztopologie eine weitere Schalteinrichtung weit entfernt ist und besonders dann, wenn dieser erste Netzabschnitt nur über eine Schalteinrichtung mit dem übrigen elektrischen Versorgungsnetz verbunden ist.

Das Verfahren betrifft nun einen Fehlerfall, in dem ein auf den ersten Netzabschnitt wirkender Netzfehler auftritt. Besonders kann der Netzfehler auch in dem ersten Netzabschnitt auftreten. Z.B. kann ein elektrischer Kurzschluss in dem Netzabschnitt auftreten, was zu einem Spannungseinbruch führen kann, um nur ein Beispiel zu nennen. Es kommt aber auch in Betracht, dass eine Überspannung auftritt, um ein weiteres Beispiel zu nennen.

Wenn dieser Fehler schwerwiegend genug ist, und nur das wird hier unter einem Fehlerfall verstanden, wird der erste Netzabschnitt durch die wenigstens eine Schalteinrichtung von dem wenigstens einen weiteren Netzabschnitt getrennt. Es kommt hier auch besonders in Betracht, dass der erste Netzabschnitt nicht nur durch eine einzige Verbindung mit dem übrigen elektrischen Versorgungsnetz verbunden ist, sondern eine solche Verbindung kann regelmäßig über mehrere Verbindungsstellen vorliegen. Dann sind auch mehrere Schalteinrichtungen vorhanden. Der erste Netzabschnitt kann auch mit mehreren weiteren Netzabschnitten verbunden sein und auch dann sind entsprechend mehrere Schalteinrichtungen vorhanden.

Tritt dieser Fehlerfall auf, tauscht die Windparkleitwarte mit der Netzleitstelle über eine Leitwartenverbindung Daten aus. Es wird hier also eine Kommunikation zwischen der Windparkleitwarte, die den wenigstens einen Windpark steuert, und der Netzleitstelle, die die wenigstens eine Schalteinrichtung steuert, vorgeschlagen. Diese Kommunikation wird hier als Leitwartenverbindung bezeichnet, weil die Netzleitstelle darüber mit der Leitwarte, nämlich der Windparkleitwarte kommuniziert. Diese Leitwartenverbindung ist eine ausfallsichere Kommunikationsverbindung zwischen der Windparkleitwarte und der Netzleitstelle. Diese Leitwartenverbindung ist unabhängig von dem elektrischen Versorgungsnetz betreibbar. Besonders ist diese Leitwartenverbindung auch dann betreibbar, wenn der Fehler in dem ersten Netzabschnitt auftritt. Diese Leitwartenverbindung kann bspw. über eine direkte Leitung zwischen der Windparkleitwarte und der Netzstelle realisiert sein. Zum Betreiben kann eine unterbrechungsfreie Stromversorgung vorgesehen sein. Diese Leitwartenverbindung wäre dann also nicht auf Energie aus dem ersten Netzabschnitt angewiesen und ist somit auch bei dem Fehler im ersten Netzabschnitt betreibbar.

Außerdem erhält der Windpark Daten von der Netzleitstelle über eine Windparkverbindung. Diese Kommunikationseinrichtung wird somit Windparkverbindung genannt, weil die Netzleitstelle hierüber Daten zum Windpark übertragen kann. Auch diese Windparkverbindung ist als eine ausfallsichere Kommunikationsverbindung zwischen dem Windpark und der Netzleitstelle vorgesehen und unabhängig von dem elektrischen Versorgungsnetz betreibbar. Insbesondere ist sie auch dann betreibbar, wenn der Fehler in dem ersten Netzabschnitt auftritt. Es können also auch und zwar direkt von der Netzleitstelle Daten zum Windpark übertragen werden, selbst wenn der erste Netzabschnitt, an dem dieser wenigstens eine Windpark angeschlossen ist, sich in einem Fehlerfall befindet.

Weiterhin ist wenigstens eine weitere Datenverbindung, insbesondere eine konventionelle Datenverbindung vorgesehen, über die weitere Daten übertragen werden, nämlich solche Daten, die nicht über die Leitwartenverbindung und auch nicht über die Windparkverbindung übertragen werden. Eine solche konventionelle Datenverbindung kann bspw. eine Funkverbindung und/oder eine Satellitenverbindung sein. Es kommt auch in Betracht, generell vorhandene Kommunikationsnetze zu verwenden. Diese wenigstens eine weitere Datenverbindung braucht nicht ausfallsicher zu sein. Diese wenigstens eine weitere Datenverbindung bzw. eine dieser wenigstens einen weiteren Datenverbindung besteht besonders zwischen dem Windpark und der Windparkleitwarte und kann als Parkverbindung bezeichnet werden, weil sie besonders auf den Windpark bezogene Daten zwischen dem Windpark und der Windparkleitwarte überträgt. Die Windparkleitwarte kann darüber den Windpark steuern und Daten vom Windpark erhalten, wie bspw. aktuelle Abgabeleistungen oder Informationen zu Störungen im Windpark wie bspw. über eine ausgefallene Windenergieanlage, um nur einige Beispiele zu nennen.

Das Verfahren schlägt somit im Fehlerfall eine besondere Art der Kommunikation vor, die nämlich zum einen als unmittelbare Kommunikation zwischen der Windparkleitwarte und der Netzstelle vorgesehen ist und als unmittelbare Kommunikation zwischen dem Windpark und der Netzleitstelle vorgesehen ist. Damit wird besonders vorgeschlagen, dass zwei spezielle Kommunikationsverbindungen vorgesehen sind, die an die Daten angepasst sind, die jeweils zwischen Windparkleitwarte und Netzleitstelle einerseits und Netzleitstelle und Windpark andererseits übertragen werden. Die jeweilige Kommunikationsverbindung, also die Leitwartenverbindung einerseits und die Windparkverbindung andererseits kann dabei an die besonderen Anforderungen an die jeweiligen Daten angepasst sein. Besonders kommt hier in Betracht, dass die Windparkleitwarte der Netzleitstelle Informationen über den Zustand des Windparks vor dem Fehlerfall überträgt. Die Daten sind also vor dem Fehlerfall in der Windparkleitwarte gesammelt worden und können im Fehlerfall an die Netzleitstelle übertragen werden. Entsprechend ist die Leitwartenverbindung dazu ausgebildet, Daten über den Zustand des Windparks bzw. der Windenergieanlagen zu übertragen. Die Windparkleitwarte kann hierbei auch Daten von der Netzleitstelle empfangen und entsprechend kann die Leitwartenverbindung auf eine solche Kommunikation in zwei Richtungen eingerichtet sein.

Von der Netzleitstelle kann bspw. an den Windpark über die Windparkverbindung ein simpler Sollwert oder Befehl übertragen werden. Entsprechend werden hier nur sehr geringe Anforderungen an eine solche Windparkverbindung gestellt.

Gemäß einer Ausführungsform wird vorgeschlagen, dass der Windpark in dem Fehlerfall von der Netzleitstelle über die Windparkverbindung in einem Netzwiederaufbaumodus versetzt wird, wenn der Netzfehler behoben ist oder behoben wird. Wenn der erste Netzabschnitt vom übrigen Versorgungsnetz getrennt wird und dabei regelmäßig auch ein Spannungseinbruch oder anderes Problem auftritt, trennt sich auch der wenigstens eine Windpark selbstständig vom Netz, nämlich vom ersten Netzabschnitt. Zumindest speist er zunächst nicht weiter oder zumindest nicht in normaler Art und Weise ein. Ist der Fehler behoben, ist also die ursprüngliche Ursache den ersten Netzabschnitt vom restlichen Versorgungsabschnitt zu trennen, wieder behoben, so kann ein Netzwiederaufbau gestartet werden. Vorzugsweise unterstützt der Windpark einen solchen Netzwiederaufbau. Dafür kann er in einen Netzwiederaufbaumodus versetzt werden. Ein solcher Netzwiederaufbaumodus kann besonders vorsehen, zunächst die Windenergieanlagen wieder in einen Betriebszustand zu versetzen und er kann vorsehen, Spannungshöhe, Blindleistungshöhe und/oder Wirkleistungshöhe anzubieten und bei Bedarf besonders nach Anforderung des Netzbetreibers, in das elektrische Versorgungsnetz einzuspeisen.

Mit anderen Worten ist ein Netzwiederaufbaumodus für den Windpark ein Modus, bei dem der Windpark zum Einspeisen vorbereitet ist, ggf. auch einspeist, nämlich in den ersten Netzabschnitt, dies aber unter speziellen Bedingungen und/oder auf eine spezielle Art und Weise macht.

Hierzu ist vorgesehen, dass die Netzleitstelle den Windpark in diesem Netzwiederaufbaumodus versetzt. Die Netzleitstelle nutzt dafür die Windparkverbindung und überträgt ein entsprechendes Signal von der Netzleitstelle zum Windpark. Das kann besonders bedeutet, dass der Windpark eine zentrale Windparksteuereinrichtung aufweist, die dieses Signal empfängt und damit über dieses Signal gesteuert werden kann. Im einfachsten Fall ist dies ein digitales Signal, das nur zwei Werte kennt, nämlich den Netzwiederaufbaumodus einzuschalten oder ihn nicht einzuschalten. So kann auf einfache Art und Weise und besonders durch eine technisch einfach ausführbare Windparkverbindung dieser Netzwiederaufbaumodus erreicht werden. Dadurch, dass die Netzleitstelle hierfür die Windparkverbindung benutzt, um das entsprechende Signal direkt zum Windpark zu übertragen, bedarf es hierfür keiner funktionierenden Kommunikationsverbindung zwischen dem Windpark bzw. der zentralen Windparksteuereinrichtung einerseits und der Windparkleitwarte andererseits. Hierdurch kann auch erreicht werden, dass eine wenig komplizierte Verbindung zwischen Netzleitstelle und Windpark ausreichend ist, um den Windpark in den Netzwiederaufbaumodus zu versetzen. Nur für eine solche einfache Windparkverbindung braucht auch nur die Voraussetzung der Netzausfallsicherheit implementiert zu werden. Das kann deutlich kostengünstiger sein, als eine komplexe, für eine hohe Datenrate vorgesehene Verbindung zwischen zentraler Windparksteuerung und Windparkleitwarte Ausfallsicher zu machen.

Gemäß einer Ausführungsform wird vorgeschlagen, dass die Netzleitstelle eine Wirkleistungserzeugung und außerdem oder alternativ eine Wirkleistungsabgabe des Windparks an den ersten Netzabschnitt steuert. Dies erfolgt insbesondere durch Übertragen von Wirkleistungssollwerten über die Windparkverbindung an den Windpark. Vorzugsweise werden hierbei die in den ersten Netzabschnitt einzuspeisenden Werte für die Wirkleistungsabgabe vorgegeben. Es kommt aber auch in Betracht, die Wirkleistungserzeugung hierdurch, nämlich durch einen entsprechenden weiteren Sollwert zu steuern. Die Wirkleistungserzeugung und die Wirkleistungsabgabe sind im häufigsten und idealisierten Fall gleich. Es kann aber sinnvoll sein, eine Wirkleistungserzeugung zumindest kurzfristig vorzusehen, ohne diese erzeugte Wirkleistung einzuspeisen, zumindest ohne sie vollständig einzuspeisen. Jedenfalls für einen kurzen Moment kann die hierbei überschüssig erzeugte Wirkleistung bspw. im Windpark thermisch verbraucht bzw. vernichtet werden. Dadurch kann die Steuerfähigkeit des Windparks erhöht werden und der Netzbetreiber, der die Netzleitstelle betreibt, hat eine höhere Sicherheit über die verfügbare Wirkleistungsabgabe.

Auch hierfür wird vorgeschlagen, die Windparkverbindung zu verwenden und insbesondere wird vorgeschlagen, dass die Netzleitstelle unmittelbar den Windpark steuert bzw. ansteuert. Auch hier kann dazu eine zentrale Windparksteuereinrichtung in dem Windpark verwendet werden, an die die Netzleitstelle also unmittelbar diese Wirkleistungssollwerte überträgt.

Um diese Übertragung mit einer möglichst einfachen Übertragungsverbindung realisieren zu können, kann vorgesehen sein, dass die Wirkleistungssollwertvorgabe in groben Stufen erfolgt, wie bspw. die Vorgabe von 0%, 30%, 60% und 90%. Für diese wenigen Werte kann somit eine technisch anspruchslose Übertragungsverbindung verwendet werden. Diese kann entsprechend kostengünstig die Netzleitstelle unmittelbar mit dem Windpark, insbesondere mit der zentralen Windparksteuereinrichtung verbunden werden.

Gemäß einer Ausführungsform wird vorgeschlagen, dass die Windparkleitwarte der Netzleitstelle wenigstens eine Information aus der folgenden Informationsliste überträgt. Diese Informationsliste beinhaltet als einen Punkt einen Wert über eine Höhe unmittelbar vor dem Fehlerfall von dem Windpark erzeugter und/oder in den ersten Netzabschnitt eingespeister Wirkleistung. Eine solche Information kann für den Netzbetreiber und damit die Steuerung über die Netzleitstelle wichtig sein, denn dadurch dürfte auch recht genau bekannt sein, wie viel Wirkleistung der Windpark aktuell erzeugen und einspeisen kann. Hier liegt besonders die Überlegung zugrunde, dass ein solcher Fehlerfall nur sehr kurz auftritt, wie bspw. nur wenige Sekunden oder wenige Minuten, bspw. maximal fünf Minuten oder maximal 10 Minuten. Innerhalb dieser kurzen Zeit wird sich die aufgrund der vorherrschenden Windbedingungen verfügbare Leistung des Windparks allenfalls unwesentlich verändern. Damit ist dieser letzte Wert vor dem Fehlerfall ein recht genauer Wert über die momentan verfügbare Wirkleistung des Windparks.

Gleichzeitig liegt der Gedanke zugrunde, dass der Windpark im Normalfall immer aktuell, also bspw. im Sekunden-, 10-Sekunden- oder zumindest Minutentakt solch aktuelle Werte über die eingespeiste Wirkleistung an die Windparkleitwarte überträgt. Das kann auf einer herkömmlichen, breiterbandigen Kommunikationsverbindung erfolgen, wie die genannte konventionelle Datenverbindung. Tritt nun der Fehlerfall auf und wird diese konventionelle Datenverbindung gestört oder unterbrochen, sind dennoch diese zuletzt aktuelle gesendeten Daten auf der Windparkleitwarte vorhanden und können somit über die Leitwartenverbindung an die Netzleitstelle übertragen werden. Es ist also nur erforderlich, dass hierfür die Leitwartenverbindung in diesem Fehlerfall noch funktioniert. Vorzugsweise werden diese Daten auch bereits vor einem Fehlerfall ständig in der Netzleitstelle aktualisiert. In dem Fall wäre sogar eine Verbindung im Fehlerfall über die Leitwartenverbindung von der Windparkleitwarte zur Netzleitstelle entbehrlich.

In jedem Fall kann erreicht werden, dass zumindest die Höhe der letzten Werte über eingespeiste Wirkleistung in der Netzleitstelle bekannt ist.

Außerdem oder alternativ wird vorgeschlagen, dass die Windparkleitwarte der Netzleitstelle eine Wirkleistungsprognose überträgt, die einen Wert oder zeitlichen Verlauf einer erzeugbaren Leistung für einen vorbestimmten Prognosezeitraum angibt. Der vorbestimmte Prognosezeitraum ist insbesondere ein Zeitraum vom aktuellen Zeitpunkt bis zu einem etwa zwei bis acht Stunden, insbesondere etwa vier bis sechs Stunden in der Zukunft liegenden Zeitpunkt. Auch dies wird über die Leitwartenverbindung übertragen.

Auch hierdurch kann erreicht werden, dass die Netzleitstelle eine Information über zu erwartende einzuspeisende Wirkleistung hat. Damit kann sie planen und besonders für den anstehenden Netzwiederaufbau den Windpark mit einsetzen. Auch hier wird eine Kommunikation geschickt so gewählt, dass die Netzleitstelle diese Prognoseinformation jedenfalls für den vorbestimmten Prognosezeitraum vorliegen hat, selbst wenn die konventionelle Datenverbindung zwischen Windpark und Windparkleitwarte beim Auftreten des Fehlerfalls gestört wird oder zusammenbricht.

Die Wirkleistungsprognose kann sich zusammensetzen aus Kenntnis über Eigenschaften des Windparks, nämlich sowohl der statischen Eigenschaften der Windenergieanlagen insgesamt, als auch Kenntnis über bspw. ausgefallene Windenergieanlagen, einerseits und besonders einer Wetter- besonders Windprognose andererseits. Mit anderen Worten kann aus dem prognostizierten Windaufkommen und der Kenntnis des Windparks diese Wirkleistungsprognose berechnet werden. Dazu kann bspw. von einer externen Einheit wie einem Wetterdienst Informationen über eine solche Wetter- besonders Windprognose empfangen werden und Informationen über den Windpark können von dem Windpark erhalten werden. Die Berechnung kann bspw. auf der Windparkleitwarte durchgeführt werden.

Gemäß einer Ausführungsform wird vorgeschlagen, dass die Netzleitstelle zum Windpark wenigstens eine der folgenden Informationen überträgt:
- ein Signal zum Starten eines Netzwiederaufbaumodus,
- einen Wirkleistungssollwert zum Vorgeben einer von dem Windpark in den ersten Netzabschnitt einzuspeisenden Wirkleistung und
- einen Blindleistungssollwert zum Vorgeben einer von dem Windpark an den ersten Netzabschnitt einzuspeisenden Blindleistung und
- einen Spannungssollwert zum Vorgeben einer von dem Windpark (304) am ersten Netzabschnitt (302) zu regelnden Netzspannung.

Besonders wird hier vorgeschlagen, dass diese Übertragung von der Netzleitstelle zum Windpark über die Windparkverbindung erfolgt. Die Windparkverbindung kann hierzu unidirektional ausgebildet sein. Es kann also vorgesehen sein, dass diese Windparkverbindung lediglich diese wenigen Informationen von der Netzleitstelle zum Windpark überträgt. Mit dem Signal zum Starten des Netzwiederaufbaumodus, das auch als Netzwiederaufbausignal bezeichnet werden kann, kann die Netzleitstelle auf einfache Art und Weise den Windpark in den Netzwiederaufbaumodus versetzen, wie oben schon ausgeführt wurde. Hierzu kann ein einzelnes Datenbit ausreichen.

Auch der Wirkleistungssollwert braucht nur in eine Richtung übertragen zu werden und kann ebenfalls besonders für den Netzwiederaufbau auf die Vorgabe weniger grober Werte beschränkt sein. Dazu wurde oben schon als Beispiel genannt, 0%, 30%, 60% und 90% als Wirkleistungssollwert vorzugeben. Das kann sich bspw. auf die Nennleistung des Windparks oder auf die letzte von dem Windpark vor dem Fehlerfall eingespeiste Wirkleistung bezogen sein.

Wenn nur vier Werte (0%, 30%, 60% und 90%) übertragen werden bzw. zur Wahl stehen, reichen zwei Datenbits aus, um diese Information zu übertragen. Mit einem weiteren Datenbit, also mit insgesamt drei Datenbits, können acht Werte angewählt werden, z.B. 0%, 15%, 30%, 45%, 60%, 75%, 90% und 100%.

Ebenfalls kann vorgesehen sein, als Alternative oder zusätzlich, einen Blindleistungssollwert zum Vorgeben einer von dem Windpark in den ersten Netzabschnitt einzuspeisenden Blindleistung zu übertragen. Auch hier kann vorgesehen sein, einen solchen Blindleistungssollwert in groben Schritten oder Stufen zu übertragen. Auch hier kommt das zur Wirkleistung genannte Beispiel in Betracht, nämlich auch als Blindleistungssollwert nur einen der Werte 0%, 30%, 60% und 90% zu übertragen. Dieser Wert kann sich auf die maximal von dem Windpark übertragbare Blindleistung beziehen.

Somit kann der Netzbetreiber über die Netzleitstelle auch hierdurch auf einfache Art und Weise eine Netzstützung des Windparks durch Einspeisung von Blindleistung aktivieren und steuern. Für diese beispielhaft genannten vier Blindleistungswerte reichen zwei Datenbits aus. Vorzugsweise überträgt die Netzleitstelle nur diese drei genannten Werte, nämlich ein Signal zum Starten des Netzwiederaufbaumodus, einen Wirkleistungssollwert und einen Blindleistungssollwert. Werden die groben oben beschriebenen Stufen der Sollwerte zur Übertragung gewählt, können zum Übertragen all dieser drei Signale fünf Bit ausreichend sein. Die gesamte Information wäre also ohne Weiteres durch ein einziges Byte übertragbar und dann wären noch drei Bits für etwaige andere Zwecke verfügbar, wie bspw. ein Kontrollbit. Es kommt auch in Betracht, mit einem weiteren Bit jeweils den Sollwert für die Wirkleistung und/oder den Sollwert für die Blindleistung etwas zu verfeinern. Die Verwendung jeweils eines weiteren Bits können entsprechend doppelt so viele Werte jeweils übertragen werden.

Somit kann auf einfache Art und Weise der Windpark besonders für den Netzwiederaufbau von der Leitstelle gesteuert werden. Eine dafür notwendige Kommunikationsverbindung braucht im Grunde nur geringsten Anforderungen zu entsprechen. Vorzugsweise reicht eine unidirektionale Verbindung von der Netzleitstelle zum Windpark, besonders zur zentralen Windparksteuereinrichtung, aus, auf der gelegentlich, bspw. in einem Abstand von 1 Sekunde, 10 Sekunden oder 1 Minute, ein Datenbyte übertragen werden muss.

Im Übrigen wird dadurch auch eine Datensicherheit über diese Parkverbindung erreicht, weil eine solche sehr einfache Kommunikationsverbindung auch einen weitreichenden Zugriff durch Unbefugte erschwert, wenn nicht sogar ausschließt. Wenn die Windparkverbindung nur das Übertragen der genannten drei Werte bzw. Signale ermöglicht, kann auch ein Unberechtigter, der sich Zugriff verschafft haben sollte, allenfalls diese drei Werte übertragen und beeinflussen.

Dadurch, dass die Netzleitstelle einen Spannungssollwert zum Vorgeben einer von dem Windpark am ersten Netzabschnitt zu regelnden Netzspannung über die Windparkverbindung überträgt, kann die Netzleitstelle und damit der Netzbetreiber den Windpark auch dafür einsetzen, die Spannung der Höhe nach vorzugeben, oder dabei zumindest mitzuwirken. Dafür kann die Netzleitstelle einen entsprechenden Spannungswert, nämlich über einen Spannungssollwert, auf einfache Art und Weise vorgeben. Dadurch, dass das von der Leitstelle gemacht wird, kann das zusammen mit anderen Anforderungen, die ebenfalls von der Netzleitstelle gesteuert werden, gut koordiniert werden.

Gemäß einer weiteren Ausführungsform wird vorgeschlagen, dass die Windparkleitwarte mit einer Windprognoseeinrichtung verbunden ist, insbesondere über eine Prognoseübertragungsverbindung, und Windprognosewerte, insbesondere eine prognostizierte mittlere Windgeschwindigkeit, von der Windprognoseeinrichtung erhält und zwischenspeichert, um daraus ggf. die Wirkleistungsprognose zu berechnen. Hierbei wird besonders vorgeschlagen, dass die Windparkleitwarte die Wirkleistungsprognose berechnet. Ihr steht dazu eine Windprognose zur Verfügung, die sie von der Windprognoseeinrichtung erhält. Außerdem steht ihr dazu Kenntnis über den Windpark zur Verfügung, für den die Wirkleistungsprognose berechnet werden soll. Das Ergebnis kann sie dann auf einfache Art und Weise an die Netzleitstelle übertragen, entweder generell, oder erst in einem Fehlerfall, wenn die Netzleitstelle diese Wirkleistungsprognose zum Steuern des Windparks für den Netzwiederaufbau benötigt. Eine solche Windprognoseeinrichtung kann bspw. ein Wetterdienst sein.

Gemäß einer Ausführungsform wird vorgeschlagen, dass die Windparkverbindung unidirektional ausgebildet ist und nur Daten in der Richtung von der Netzleitstelle zum Windpark übertragen werden. Insbesondere werden sie nur von der Netzleitstelle zu der zentralen Windparksteuereinrichtung übertragen. Im Übrigen wird dieses Wirkprinzip vorzugsweise auch für mehrere Windparks an demselben ersten Netzabschnitt angewendet. Durch dieses Verwenden einer unidirektional ausgebildeten Windparkverbindung ist diese auf einfache Art und Weise ausbildbar. Es brauchen nur wenige Daten übertragen zu werden und es braucht auch keine beidseitige Kommunikation zwischen dem Netzbetreiber und dem Windpark durchgeführt zu werden. Es kann ausreichend sein, dass der Windpark die wenigen Daten empfangen und auswerten kann, die die Netzleitstelle überträgt. Wird so wenig übertragen, dass die Übertragung eines Bytes für sämtliche Informationen ausreichend ist, wie oben beschrieben wurde, so kann es ausreichend sein, wenn die Netzleitstelle dieses Byte erzeugen und übertragen kann und der Windpark bzw. die zentrale Windparksteuereinrichtung dieses eine Byte entschlüsseln kann.

Außerdem oder alternativ wird vorgeschlagen, dass die Windparkverbindung eine geringe Bandbreite bzw. eine geringe Übertragungsrate aufweist. Insbesondere kann es ausreichend sein, wenn höchstens ein Byte pro Sekunde, vorzugsweise höchstens ein Byte in 10 Sekunden und insbesondere vorzugsweise ein Byte in einer Minute übertragen werden kann. Entsprechend reicht es aus, wenn die Übertragungsverbindung, insbesondere eine entsprechende Übertragungsleitung und/oder eine entsprechende Funkverbindung eine solche Übertragungsrate bzw. Bandbreite gewährleisten kann. Es ist auch nicht unbedingt schädlich, wenn mehr übertragen werden kann, es ist aber nicht erforderlich, dass mehr übertragen werden kann.

Vorzugsweise ist die Leitwartenverbindung bidirektional ausgebildet und es werden Daten zwischen der Netzleitstelle und der Windparkleitwarte in beide Richtungen übertragen. Somit kann die Leitwartenverbindung, also die Verbindung zwischen Parkleitwarte und Netzleitstelle aufwendiger ausgestaltet sein, als die Windparkverbindung. Über die Leitwartenverbindung können entsprechend mehr und komplexere Daten übertragen werden. Eine solche Leitwartenverbindung kann entsprechend auch deutlich komplexer und damit auch teurer sein, als die Windparkverbindung.

Durch die vorgeschlagene Struktur, besonders die Verwendung einer einfachen, besonders unidirektionalen Windparkverbindung einerseits und die Verwendung einer komplexeren Leitwartenverbindung andererseits ist es möglich, einerseits die Netzleitstelle mit ausreichend Daten zu versorgen und dabei auch eine bidirektionale Kommunikation zwischen der Netzleitstelle und der Windparkleitwarte zu erreichen, andererseits aber kostspielige weitere Verbindungen zu vermeiden. Dennoch kann vorteilhafterweise eine Ansteuerung jedes Windparks durch eine entsprechende Netzleitstelle unmittelbar erfolgen. Es ist auch nicht erforderlich, dass für den Fehlerfall eine Kommunikationsverbindung zwischen Windparkleitwarte und dem Windpark aufrechterhalten bleibt. Insbesondere kann dort eine konventionelle Datenverbindung verwendet werden, die entsprechend kostengünstiger ist und nicht ausfallsicher gestaltet werden muss.

Gemäß einer Ausführungsform wird vorgeschlagen, dass Daten zum Steuern des Windparks in der Netzleitstelle hinterlegt sind. Außerdem oder alternativ kommt in Betracht, dass diese Daten in der Windparkleitwarte hinterlegt sind und im Fehlerfall über die Leitwartenverbindung zur Netzleitstelle übertragen werden können. Diese Daten sind ausgewählt aus der folgenden Liste. Die Daten betreffen also wenigstens ein Element, einige Elemente oder alle Elemente der folgenden Liste mit den folgenden Elementen:
- eine Wirkleistungsprognose,
- eine Windgeschwindigkeitsprognose,
- Kenndaten des Windparks, insbesondere Nennleistung, Nennblindleistung und/oder Leistungsgradienten, die eine maximale Wirkleistungsänderung des Parks angeben, und
- eine verfügbare Wirkleistung des Windparks.

Somit kann eine Wirkleistungsprognose in der Netzleitstelle immer verfügbar sein, weil sie dort entweder hinterlegt ist, oder weil sie über die ausfallsichere Leitwartenverbindung von der Windparkleitwarte bezogen werden kann. Wenn dann also ein Fehlerfall auftritt und einige andere Datenverbindungen gestört oder zusammengebrochen sein könnten, hat die Netzleitstelle dennoch Zugriff auf diese Wirkleistungsprognose, weiß somit, welche Wirkleistung der Windpark in der nahen Zukunft, insbesondere in den nächsten zwei bis acht, insbesondere vier bis sechs Stunden erzeugen und einspeisen kann und kann diese Daten zum Steuern eines Netzwiederaufbaus verwenden.

Ebenso kann eine Windgeschwindigkeitsprognose für die Netzleitstelle verfügbar sein und diese kann auch dazu dienen, eine Wirkleistungsprognose zu bestimmen. Diese Wirkleistungsprognose kann dann entsprechend auf der Windparkleitwarte oder direkt in der Netzleitstelle erstellt werden. Auch dadurch kann selbst im Fehlerfall der Netzleitstelle eine Wirkleistungsprognose zur Verfügung stehen.

Außerdem oder alternativ hat die Netzleitstelle Zugriff auf Kenndaten des Windparks. Auch diese kann sie für einen Netzwiederaufbau unter Zuhilfenahme des wenigstens einen Windparks verwenden. Ggf. kann sie aus den Kenndaten des Windparks und einer Windgeschwindigkeitsprognose eine Wirkleistungsprognose bestimmen, oder diese Bestimmung erfolgt auf der Windparkleitwarte, von der aus auch im Fehlerfall eine Übertragung über die Leitwartenverbindung zur Netzleitstelle erfolgen kann.

Die Kenndaten des Windparks sind besonders Nennleistung, Nennblindleistung oder ein Leistungsgradient. Besonders mit der Nennleistung kann über die Kenntnis einer Windprognose eine Wirkleistungsprognose berechnet werden. Ähnlich kann aus der Nennblindleistung und einer Wetterprognose oder einer Wirkleistungsprognose eine mögliche einstellbare Blindleistung bestimmt werden. Bspw. kann die Blindleistung zum einen von der erzeugbaren Wirkleistung abhängen, in dem nämlich bei mehr Wirkleistung, wenn also entsprechend Wind vorhanden ist, auch mehr Blindleistung erzeugt werden kann. Gleichzeitig ist aber ein einspeisbarer Strom begrenzt, der zwischen einzuspeisender Wirkleistung und Blindleistung aufgeteilt werden muss. Wenn also bspw. bereits Wirkleistung mit hoher Leistung eingespeist wird, kann regelmäßig nur noch weniger Blindleistung eingespeist werden, wobei dies von der Dimensionierung der Zuleitung und besonders des Netzanschlusspunktes abhängt.

Über die Kenntnis des Leistungsgrenzgradienten kann die Netzleitstelle ihren Netzwiederaufbau besser planen, denn es kann berücksichtigt werden, wie schnell die Wirkleistung des Windparks besonders beim Einspeisen erhöht werden kann. Dies kann berücksichtigt werden und dadurch kann bspw. die Netzleitstelle und damit der Netzbetreiber besser einschätzen, wie lange es dauert, bis eine notwendige Wirkleistung im ersten Netzabschnitt vorhanden ist, so dass durch die wenigstens eine Schalteinrichtung der erste Netzabschnitt wieder mit dem übrigen Versorgungsnetz verbunden werden kann.

Außerdem oder alternativ wird vorgeschlagen, dass eine verfügbare Wirkleistung des Windparks hinterlegt ist. Mit dieser Information hat die Netzleitstelle, und damit der Netzbetreiber, unmittelbar Informationen über die in dem Moment verfügbare Wirkleistung. Das kann bspw. die letzte eingespeiste Wirkleistung des Windparks vor dem Fehlerfall sein, wenn dieser Fehlerfall nur sehr kurz angedauert hat, wie bspw. wenige Sekunden.

Vorzugweise werden einige, mehrere oder alle der hinterlegten Daten häufig, insbesondere kontinuierlich bzw. quasi kontinuierlich aktualisiert. Dadurch wird besonders erreicht, dass im Fehlerfall, wenn eine Aktualisierung dann aufgrund einer Störung oder Kommunikationsunterbrechungen nicht mehr stattfinden kann, die letzten aktuellen Werte aber vorhanden sind und auch in der Windparkleitwarte bzw. der Netzleitstelle hinterlegt sind. Mit anderen Worten kann durch diese kontinuierliche oder zumindest häufige Aktualisierung Vorsorge für einen Netzfehlerfall getroffen werden. Hierbei ist unter einer quasi kontinuierlichen Aktualisierung zu verstehen, dass eine kontinuierliche Aktualisierung im Rahmen der technischen Möglichkeiten vorgenommen wird. Besonders wird eine Aktualisierung, wie auch viele andere Datenübertragungen, digital vorgenommen und eine kontinuierliche Aktualisierung ist dann eine, die so häufig wie mit der verwendeten Einrichtung technisch möglich als digitale Aktualisierung vorgenommen werden kann.

Gemäß einer Ausführungsform wird vorgeschlagen, dass im Fehlerfall der Windpark in einen Netzwiederaufbaumodus versetzt wird und der Windpark in dem Netzwiederaufbaumodus einen, mehrere oder alle der folgenden Schritte ausführt, nämlich:
- Aktivieren einer Vorhalteleistung, wobei die Vorhalteleistung eine Leistung ist, die der Windpark auf ein Anforderungssignal in den ersten Netzabschnitt einspeisen kann,
- Einspeisen elektrischer Wirkleistung in Abhängigkeit einer Frequenz der elektrischen Spannung in den ersten Netzabschnitt, während der Netzwiederaufbaumodus eine frequenzabhängige Wirkleistungsregelung vorschreibt,
- Einspeisen elektrischer Wirkleistung unter Einhaltung eines dem Betrage nach begrenzten Leistungsgradienten, der eine Änderung der Wirkleistung in Abhängigkeit der Zeit beschreibt, während der Netzwiederaufbaumodus eine gradientenfeste Wirkleistungsregelung vorschreibt, und
- Einspeisen elektrischer Blindleistung in Abhängigkeit einer Spannung in den ersten Netzabschnitt, während der Netzwiederaufbaumodus eine spannungsabhängige Blindleistungseinspeisung vorschreibt.

Es wird also vorgeschlagen, zunächst einen solchen Netzwiederaufbaumodus zu initiieren. Das erfolgt vorzugsweise durch die Netzleitstelle über die Windparkverbindung. Dieser Netzwiederaufbaumodus kann dann in dem Windpark durch die zentrale Windparksteuereinrichtung realisiert und koordiniert werden.

Das vorgeschlagene Aktivieren einer Vorhalteleistung bedeutet, dass der Windpark, also insbesondere seine Windenergieanlagen oder einige davon insoweit hochgefahren werden und sich auch schon Drehen, dass in einem sehr kurzen Moment diese Vorhalteleistung aktiviert und in das Netz, hier also den ersten Netzabschnitt, eingespeist werden kann. Im einfachsten Fall bedeutet das, dass die Windenergieanlagen diese Leistungen bereits erzeugen und diese Leistung lediglich verbraucht wird, besonders durch die elektrische Widerstände thermisch verbraucht wird. Es kommt aber auch in Betracht, dass die jeweilige Windenergieanlage lediglich auf Drehzahl gebracht wird und Leistung zur Eigenversorgung produziert. Zum Abrufen kann dann dieser Betrieb so geändert werden, dass die Rotorblätter so in den Wind gedreht werden, dass sie dem Wind Leistung entnehmen, nämlich deutlich mehr als vorher. Hier kann die Leistung zwar nicht sofort, aber sehr schnell abgerufen werden, denn Rotorblätter können in wenigen Sekunden in den Wind gedreht werden.

Es kann dann vorgesehen sein, elektrische Wirkleistung in Abhängigkeit einer Frequenz der elektrischen Spannung im ersten Netzabschnitt einzuspeisen, wobei dies nur dann oder besonders dann erfolgt, wenn in dem Netzwiederaufbaumodus eine frequenzabhängige Wirkleistungsregelung vorgeschrieben wird. Es wird also ein spezieller Regelungsmodus innerhalb des Netzwiederaufbaus aktiviert und in dem erfolgt eine vorbestimmte frequenzabhängige Wirkleistungseinspeisung.

Das Einspeisen elektrischer Wirkleistung kann unter Einhaltung eines dem Betrage nach begrenzten Leistungsgradienten erfolgen. Es kann also hier vorgesehen sein, dass sich die Wirkleistung nur innerhalb vorgegebener Grenzen ändert. Dadurch kann eine gewisse Stabilität der Wirkleistungsveränderung erreicht werden. Besonders kann dadurch einem Aufschwingen entgegengewirkt werden, was in einem vergleichsweise instabilen Netzwiederaufbauzustand eine Gefahr darstellen kann. Dabei wird dieses Einspeisen und Einhaltung des Leistungsgradienten nur durchgeführt, wenn ein entsprechender Modus eingeschaltet wird, nämlich eine gradientenfeste Wirkleistungsregelung. Diese wird vorgeschrieben und dann wird entsprechend mit begrenztem Leistungsgradienten eingespeist. Solche Modi, nämlich die frequenzabhängige Einspeisung als auch die gradientenfeste Wirkleistungsregelung können auch kombiniert werden. Besonders wird vorgeschlagen, dass eine Kombination so aussieht, dass eine frequenzabhängige Wirkleistungseinspeisung erfolgt, solange diese in dem durch die Gradienten vorgegebenen Grenzen liegt.

Es kann auch die Einspeisung elektrischer Blindleistung in Abhängigkeit einer Spannung in dem ersten Netzabschnitt vorgesehen sein. Auch dieser Modus soll gewählt werden, wenn er entsprechend als spannungsabhängige Blindleistungseinspeisung vorgeschrieben wird. Im Übrigen können diese Vorschriften auch aktuell von dem Netzbetreiber über seine Netzleitstelle vorgegeben werden. Alternativ gibt es Netzzustände, die der Windpark bzw. die zentrale Windparksteuereinrichtung erfasst und davon abhängig diese Modi ausgewählt werden. Davon abhängig wird also insbesondere eine frequenzabhängige Wirkleistungsregelung, und/oder eine gradientenfeste Wirkleistungsregelung und/oder eine spannungsabhängige Blindleistungsregelung ausgewählt.

Erfindungsgemäß wird auch eine Kommunikationsvorrichtung gemäß Anspruch 12 vorgeschlagen. Diese ist zum Steuern eines Netzwiederaufbaus eines elektrischen Versorgungsnetzes vorgesehen. Das zugrundegelegte elektrische Versorgungsnetz weist einen ersten Netzabschnitt und wenigstens einen weiteren Netzabschnitt auf. An den ersten Netzabschnitt ist wenigstens ein Windpark angeschlossen und der Windpark ist über eine Windparkleitwarte ansteuerbar. Der erste Netzabschnitt ist über wenigstens eine Schalteinrichtung über den wenigstens einen weiteren Netzabschnitt gekoppelt, um elektrische Energie zwischen den Netzabschnitten zu übertragen und die wenigstens eine Schalteinrichtung ist dazu eingerichtet, in einem Fehlerfall den ersten Netzabschnitt von dem wenigstens einen weiteren Netzabschnitt zu trennen.

Zum Steuern der Schalteinrichtung ist eine Netzleitstelle vorgesehen. Wobei für einen Fehlerfall, bei dem ein auf den ersten Netzabschnitt wirkender Netzfehler auftritt, vorgesehen ist, dass der erste Netzabschnitt durch die Schalteinrichtung von dem wenigsten einen weiteren Netzabschnitt getrennt wird. Die Kommunikationsvorrichtung hierfür umfasst eine Leitwartenverbindung, die dazu vorbereitet ist, dass darüber die Windparkleitwarte mit der Netzleitstelle Daten austauscht, wobei die Leitwartenverbindung eine ausfallsichere Kommunikationsverbindung zwischen der Windparkleitwarte und der Netzleitstelle ist und abhängig von dem elektrischen Versorgungsnetz betreibbar ist, insbesondere auch bei dem Fehler im ersten Netzabschnitt betreibbar ist.

Weiterhin ist eine Windparkverbindung vorgesehen, die dazu vorbereitet ist, dass über sie der Windpark Daten von der Netzleitstelle erhält, wobei die Windparkverbindung eine ausfallsichere Kommunikationsverbindung zwischen dem Windpark und der Netzleitstelle ist und unabhängig von dem elektrischen Versorgungsnetz betreibbar ist, insbesondere auch bei dem Fehler im ersten Netzabschnitt betreibbar ist. Außerdem ist eine weitere Datenverbindung vorgesehen, die zumindest zwischen dem Windpark und der Windparkleitwarte vorgesehen ist. Eine solche, zwischen dem Windpark und der Windparkleitwarte vorgesehene Datenverbindung kann als Parkverbindung bezeichnet werden. Mit dieser weiteren Datenverbindung werden besonders weitere Daten übertragen, die nicht über die Leitwartenverbindung und nicht über die Windparkverbindung übertragen werden. Die weitere Datenverbindung kann besonders als konventionelle Datenverbindung vorgesehen sein. Es kann auch vorgesehen sein, dass weitere Datenverbindungen vorhanden sind, die bspw. zwischen einer Windparkleitwarte und einer Prognoseeinrichtung vorgesehen sind.

Die Kommunikationsvorrichtung arbeitet so, wie vorstehend unter Bezugnahme auf Ausführungsformen des Verfahrens zum Steuern eines Netzwiederaufbaus beschrieben wurde.

Vorzugsweise umfasst die Kommunikationsvorrichtung die Windparkleitwarte und außerdem oder alternativ die Netzleitstelle und weiterhin außerdem oder alternativ eine Windparksteuereinrichtung des Windparks und dazu weiterhin oder alternativ eine Windprognoseeinrichtung zum Erstellen einer Windprognose.

Vorzugsweise ist die Kommunikationseinrichtung dazu vorbereitet, ein Verfahren gemäß einem der vorstehend beschriebenen Ausführungsformen durchzuführen. Besonders ist sie dazu vorbereitet, die dort beschriebenen Kommunikationen durchzuführen, besonders die genannten Daten von der Netzleitstellte über die Windparkverbindung zum Windpark zu übertragen und/oder die genannten Daten zwischen der Windparkleitwarte und der Netzleitstelle über die Leitwartenverbindung auszutauschen.

Vorzugsweise ist die Windparkverbindung unidirektional ausgebildet und dazu vorbereitet so zu arbeiten, wie dies gemäß einer der entsprechenden Ausführungsformen des Verfahrens zum Steuern des Netzwiederaufbaus beschrieben wurde.

Gemäß einer weiteren Ausführungsform ist die Leitwartenverbindung bidirektional ausgebildet und dazu vorbereitet, Daten zwischen der Netzleitstelle und der Windparkleitwarte in beide Richtungen zu übertragen. Besonders ist sie dazu ausgebildet, so zu arbeiten, wie dies gemäß entsprechenden Ausführungsformen eines Verfahrens zum Steuern eines Netzwiederaufbaus beschrieben ist.

Erfindungsgemäß wird auch ein Windpark vorgeschlagen. Dieser weißt eine zentrale Windparksteuereinrichtung auf, über die Windenergieanlagen des Windparks angesteuert werden können und die eine Kommunikation nach extern vornehmen kann. Diese Windparksteuereinrichtung ist dazu vorbereitet über eine unidirektionale Windparkverbindung Daten von einer Netzleitstelle zu empfangen. Besonders arbeitet sie so, wie das im Zusammenhang mit Ausführungsformen des Verfahrens zum Steuern des Netzwiederaufbaus beschrieben wurde. Besonders arbeitet sie so bzw. ist für eine Kommunikation oder einen Datenaustausch vorbereitet, wie im Zusammenhang mit einer Datenübertragung von der Netzleitstelle zum Windpark bzw. zur zentralen Windparksteuereinrichtung beschrieben wurde.

Vorzugsweise ist der Windpark und damit die zentrale Parksteuereinrichtung dazu vorbereitet, in einer Kommunikationsvorrichtung gemäß wenigstens einer Ausführungsform einer Kommunikationsvorrichtung eingebunden zu werden. Besonders ist sie über eine beschriebene Windparkverbindung mit der Leistelle verbunden und über eine weitere Datenverbindung, insbesondere über eine Parkverbindung, mit der Windparkleitwarte verbunden.

Die Erfindung wird nun nachfolgend anhand von Ausführungsformen unter Bezugnahme auf die begleitenden Figuren exemplarisch näher beschrieben.
- Figur 1: zeigt eine Windenergieanlage in einer perspektivischen Darstellung.
- Figur 2: zeigt einen Windpark in einer schematischen Darstellung.
- Figur 3: zeigt eine erfindungsgemäße Kommunikationsvorrichtung.

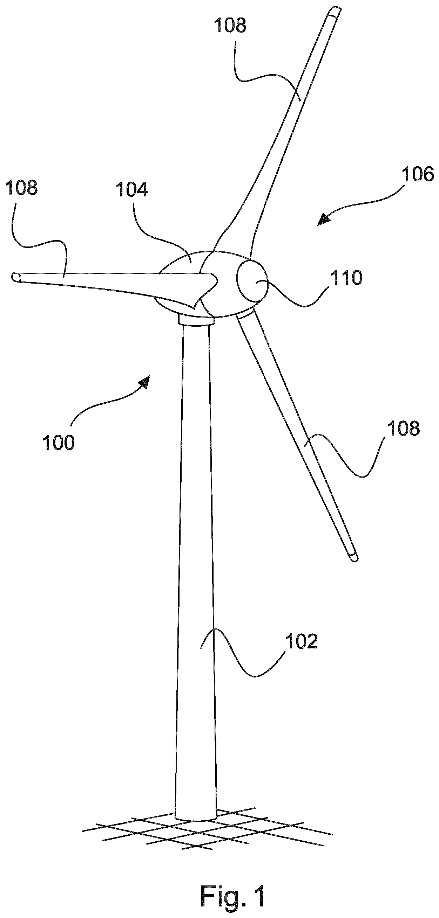

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

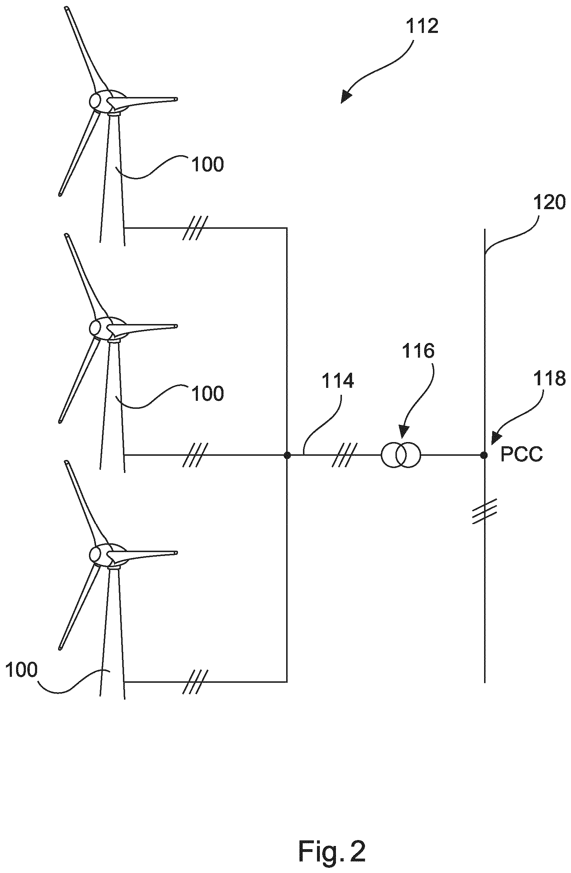

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

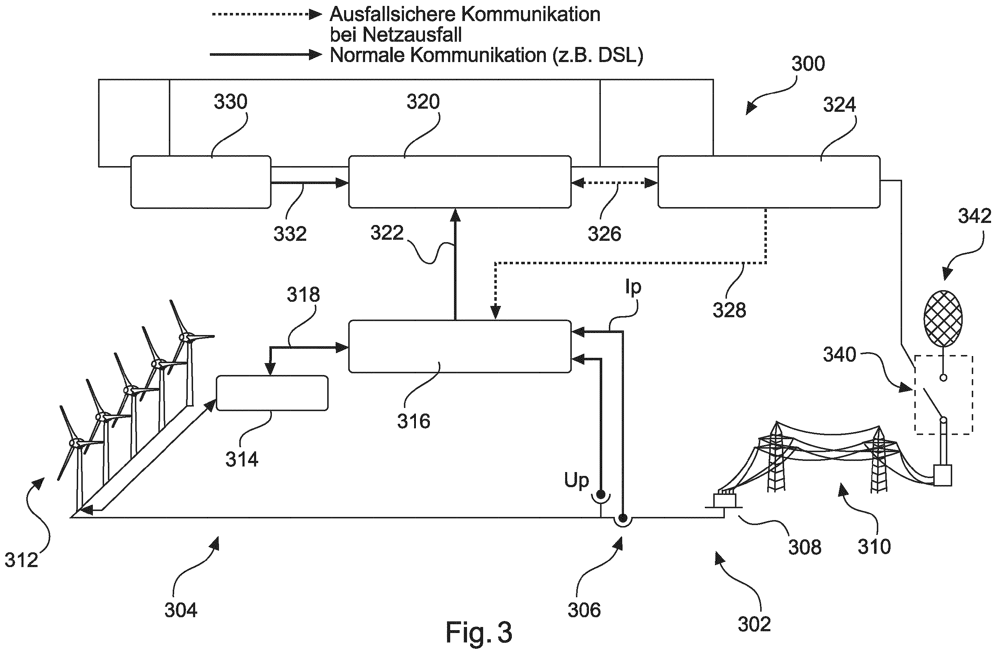

Figur 3 zeigt eine Kommunikationsvorrichtung 300, die in einen ersten Netzabschnitt 302 eingebettet ist. An diesen ersten Netzabschnitt 302 ist ein Windpark 304 über einen Netzanschlusspunkt 306 angeschlossen. Der erste Netzabschnitt 302 ist Teil eines elektrischen Versorgungsnetzes und mit wenigstens einem weiteren Netzabschnitt (342) über eine Schalteinrichtung 340 verbunden. Insoweit ist der erste Netzabschnitt 302 durch einen Hochspannungstrafo 308 und eine Hochspannungsleitung 310 symbolisiert.

Der Windpark 304 weist mehrere Windenergieanlagen 312 auf, die über einen Ansteuerrechner 314 angesteuert werden können. Außerdem ist eine zentrale Windparksteuereinrichtung 316 vorgesehen, die über eine Austauschleitung 318 mit dem Ansteuerrechner 314 kommunizieren kann. In einer anderen Ausführungsform kann der Ansteuerrechner 314 auch Teil der zentralen Windparksteuereinrichtung 316 sein.

Jedenfalls erfasst die zentrale Windparksteuereinrichtung, die vereinfachend auch als FCU bezeichnet werden kann, eine parkseitige Spannung UP und einen parkseitigen Einspeisestrom I_{P} am Netzanschlusspunkt 306 oder windparkseitig in der Nähe des Netzanschlusspunktes 306. Dadurch kann die zentrale Parksteuereinrichtung 316 Strom und Spannung am Netzanschlusspunkt, nämlich insbesondere parkseitig, also zum Windpark 304 hin, erfassen und auswerten. Abhängig von dieser Auswertung kann die zentrale Windparksteuereinrichtung den Windpark, nämlich insbesondere die Windenergieanlagen 312 ansteuern. Dabei können auch Werte von den Windenergieanlagen 312 erfasst und ausgewertet werden. Solche Werte können jeweils von der betreffenden Windenergieanlage 312 aktuell abgegebene und/oder abgebbare Wirkleistung oder Blindleistung sein. Solche Werte können auch Zustandsinformationen der Windenergieanlage betreffen, besonders Störungs- oder Fehlersignale.

Die zentrale Windparksteuereinrichtung 316 liefert solche oder andere Daten auch an eine Windparkleitwarte 320. Insbesondere wird dazu eine Datenverbindung 322 verwendet, die hier auch als Parkverbindung 322 bezeichnet wird, und darüber wird insbesondere die aktuelle Einspeisung des Windparks 304 und die Verfügbarkeit des Windparks 304 übertragen. Die Verfügbarkeit des Windparks ist dabei besonders eine Information über die verfügbare Wirkleistung des Windparks. Vorzugsweise werden auch Kenndaten des Windparks, insbesondere die Nennleistung des Windparks und außerdem oder alternativ die Nennblindleistung des Windparks und außerdem oder alternativ Leistungsgrenzgradienten übertragen, die eine maximale Wirkleistungsänderung des Parks angeben. Diese Daten werden vorzugsweise in der Windparkleitwarte 320 zwischengespeichert und können ggf. abgerufen werden.

Die Windparkleitwarte 320 kommuniziert auch mit einer Netzleitstelle 324 und diese Kommunikation erfolgt über eine Leitwartenverbindung 326. Diese Leitwartenverbindung 326 und die Kommunikation zwischen der Windparkleitwarte 320 und der Netzleitstelle 324 ist besonders für eine Netzwiederaufbausituation vorgesehen, wenn nämlich der erste Netzabschnitt 302 von einem weiteren Netzabschnitt getrennt wurde und damit insgesamt von dem übrigen elektrischen Versorgungsnetz getrennt wurde. Dies ist meist auch gekoppelt mit einem Zusammenbruch des ersten Netzabschnitts 302 oder zumindest mit einem Spannungseinbruch in diesem ersten Netzabschnitt 302, um eine am häufigste zu erwartende Situation zu nennen.

Besonders hierfür wird vorgeschlagen, dass die Netzleitstelle 324 Werte von der Windparkleitwarte 320 erhält. Dazu gehören besonders Werte der letzten Einspeisung vor diesem Ereignis bzw. dem Fehlerfall bzw. der Trennung des ersten Netzabschnitts von wenigstens einen weiteren Netzabschnitt bzw. einem damit einhergehenden Spannungseinbruch in diesem ersten Netzabschnitt. Es wird somit vorgeschlagen, bis zu diesem Ereignis die letzten Werte der Einspeisung des Windparks 304 zu erhalten. Das ist besonders die letze Wirkleistungseinspeisung der Höhe nach vor dem Auftreten des genannten Ereignisses. Diese Werte können somit von der Windparkleitwarte 320 bereitgestellt werden, selbst wenn im Falle des Ereignisses die Datenverbindung 322, die auch als weitere Datenverbindung 322 bezeichnet werden kann, zusammengebrochen sein sollte. Dafür sind nämlich diese Daten bereits vorher vorsorglich von der zentralen Windparksteuereinrichtung 316 an die Windparkleitwarte 320 übertragen worden. Hier ist zu beachten, dass an die Windparkleitwarte 320 auch weitere Windparks angeschlossen sein können, also insbesondere weitere zentrale Windparksteuereinrichtungen weiterer Windparks.

Es wird weiterhin vorgeschlagen, dass die Netzleitstelle 324 über die Leitwartenverbindung 326 eine Prognose von der Parkleitwarte 320 erhält, nämlich besonders eine Wirkleistungsprognose, die angibt, wie viel Wirkleistung der betreffende Windpark 304, auch dies kann für mehrere Windparks erfolgen, in der Zukunft liefern kann, also erzeugen kann und auch einspeisen kann, besonders in den kommenden Stunden, insbesondere in den kommenden sechs Stunden. Bspw. kann für diesen beispielhaften Zeitraum von sechs Stunden alle 15 Minuten ein Prognosewert über die lieferbare Wirkleistung für jeden Park bereitgestellt werden.

Die Leitwartenverbindung 326 ist dabei als ausfallsichere Kommunikationsverbindung vorgesehen. Bspw. kann dafür eine unterbrechungsfreie Stromversorgung (USV) vorgesehen sein, um auch bei Netzausfall noch arbeiten zu können. Die Leitwartenverbindung 326 kann dabei auch so dimensioniert sein, dass sie bspw. ein kByte pro Windpark, über den Informationen ausgetauscht werden, übertragen kann. Eine solche ausfallsichere Leitwartenverbindung 326 kann vergleichsweise kostspielig sein, ist dafür aber nur zwischen der Netzleitstelle 324 und der Windparkleitwarte 320 vorgesehen. Besonders wenn mehrere Windparks vorgesehen sind, die alle mit derselben Windparkleitwarte 320 verbunden sind, bedeutet das, dass nur eine solche Leitwartenverbindung 326 zwischen der Windparkleitwarte 320 und der Netzleitstelle 324 vorgesehen sein muss.

Weiterhin ist die Netzleitstelle 324 über eine Windparkverbindung 328 mit dem Windpark 304 verbunden. Die Verbindung geht dabei zur zentralen Windparksteuereinrichtung 316. Wenn mehrere Windparks vorhanden sind, werden auch mehrere dieser Windparkverbindungen 328 benötigt, nämlich für jeden Windpark eine Windparkverbindung 328.

Dafür wird hier aber eine sehr kostengünstige Windparkverbindung 328 vorgeschlagen. Sie ist nämlich unidirektional ausgebildet und überträgt nur Daten von der Netzleitstelle 324 zur zentralen Windparksteuereinrichtung 316. Hier wird besonders vorgeschlagen, dass ein Aktivierungssignal zum Aktivieren eines Netzwiederaufbaubetriebs übertragen wird. Für eine solche Informationsübertragung reicht ein einzelnes Bit aus. Außerdem wird vorgeschlagen, für eine Wirkleistungssteuerung Wirkleistungssollwerte von der Netzleitstelle 324 über die Windparkverbindung 328 zur zentralen Windparksteuereinrichtung 316 zu übertragen. Auch all diese Datenübertragung ist für eine Netzwiederaufbausituation vorgesehen. Für eine solche Netzwiederaufbausituation wurde erkannt, dass die Berücksichtigung der von dem Windpark lieferbaren Windparkleistung in groben Schritten vorgesehen werden kann. Es kann also reichen, wenn nur wenige mögliche Werte auswählbar sind, wie bspw. 0%, 30%, 60% und 90% der Nennleistung des Windparks. Entsprechend brauchen auch nur diese vier Werte identifizierbar sein und eine Identifizierung von vier Werten ist mit zwei Bits möglich.

Jedenfalls sind für diese Aufgabe nur wenige Bits nötig und dadurch kann diese Windparkverbindung 328 kostengünstig hergestellt werden, zumindest deutlich kostengünstiger als die Leitwartenverbindung 326. Dadurch wird es auch möglich, mit vertretbarem Aufwand, jeweils eine Windparkverbindung 328 von der einen Netzleitstelle 324 zu mehreren Windparks vorzusehen.

Außerdem ist noch eine Prognoseeinrichtung 330 vorgesehen, die Wetterprognosen erstellt und beispielsweise ein Wetterdienst sein kann. Es kommt auch ein spezieller Vorhersagedienst für zu erwartenden Wind in Betracht, der beispielsweise auch ein Prognosemodell einsetzen kann. Diese Windprognoseeinrichtung 330 ist über eine Verbindungseinrichtung 332 mit der Windparkleitwarte 320 verbunden und die Verbindungsvorrichtung kann auch eine der vorgeschlagenen weiteren Datenverbindungen sein. Insbesondere überträgt die Windprognoseeinrichtung 330 entsprechende Winddaten und gegebenenfalls weitere Wetterdaten über diese Verbindungseinrichtung 332 an die Windparkleitwarte 320. Mit diesen Wetterinformationen und Informationen über Kenndaten des Windparks 304, die die Windparkleitweite 320 von der zentralen Windparksteuereinrichtung erhalten hat, kann die Windparkleitwarte Wirkleistungsprognosen berechnen und diese gegebenenfalls der Netzleitstelle 324 bereitstellen. Dafür kann es beispielsweise zweckmäßig sein und wird hiermit vorgeschlagen, dass Daten für eine mehrstündige Prognose, besonders für eine 6-stündige Prognose bereitgestellt werden, damit auch die Windparkleitwarte 320 eine entsprechend mehrstündige Wirkleistungsprognose berechnen und der Netzleitstelle 324 bereitstellen kann.

Die Kommunikationsvorrichtung 300 umfasst somit wenigstens die Leitwartenverbindung 326 und die Windparkverbindung 328. Sie kann auch noch die weitere Datenverbindung 322 zwischen zentralen Windparksteuereinrichtung 316 und der Windparkleitwarte 320 umfassen. Außerdem kann auch noch die Verbindungseinrichtung 332 Teil der Kommunikationsvorrichtung 300 sein.

Die vielen Kommunikationsverbindungen, besonders die Austauschleitung 318, die weitere Datenverbindung 322, die Leitwartenverbindung 326, die Windparkverbindung 328 und die Verbindungseinrichtung 332 sind in der Figur 3 im Wesentlichen als Leitung veranschaulicht. Tatsächlich kommt zum einen auch in Betracht, dass die Verbindungen, besonders die weitere Datenverbindung 322 bzw. die Parkverbindung 322, und die Verbindungseinrichtung 332 Daten über eine Funkstrecke übertragen. Außerdem umfassen solche Kommunikationsverbindungen nicht nur die veranschaulicht dargestellten Übertragungspfade, sei es nun kabelgebunden oder kabellos, sondern auch die entsprechenden Sende- beziehungsweise Empfangsvorrichtungen. Die Sende- und/oder Empfangsvorrichtungen sind entsprechend in den Einrichtungen vorgesehen, die dort verbunden sind. Besonders sind diese vorgesehen in dem Ansteuerrechner 314, der zentralen Windparksteuerungseinrichtung 316, der Windparkleitwarte 320, der Netzleitstelle 324 und der Windprognoseeinrichtung 330. Optional sind der Ansteuerrechner 314 und/oder die zentrale Windparksteuerungseinrichtung 316 und/oder die Windparkleitwarte 320 und/oder die Netzleitstelle 324 und/oder die Windprognoseeinrichtung 330, Bestandteil der Kommunikationsvorrichtung.

Es wurde somit erkannt, dass die Netzbetriebsführungsstrategie und die dazugehörige Kommunikationsinfrastruktur bisher auf die physikalischen Eigenschaften konventioneller Einspeiser, insbesondere große Kraftwerksblöcke, ausgerichtet ist. Zur Verbesserung wird ein Vorschlag zur Integration von Windenergieanlagen in die Leittechnik der Netzbelreiber gemacht.

Bisher war es so, dass in einer Netzwiederaufbausituation der aufbauende Netzbetreiber eine Kommunikationsschnittstelle zum steuern aller Kraftwerken und der Sekundärtechnik in seinem Netz benötigte, sowie zur Abfrage des Status der Kraftwerke. Es wurde erkannt, dass zukünftig die Netze nicht nur mit konventionellen Kraftwerken aufgebaut werden, sondern dass es vorteilhaft ist, dass auch die Windparks zukünftig vom Netzbetreiber über eine gegen Stromausfälle abgesicherte Kommunikationsschnittstelle bei einem Black-Out ansprechbar sind. Des Weiteren ist es hierbei vorteilhaft, wenn dem Netzbetreiber in einer Netzwiederaufbausituation umspannwerkscharf, also jeweils auf ein Umspannwerk bezogen, die verfügbare Leistung während des gesamten Netzwiederaufbaus bekannt ist

Zur Lösung wird besonders eine Kommunikationsschnittstelle zwischen Netzbetreiber und Windpark vorgeschlagen, welche in einer Netzwiederaufbausituation funktionsfähig bleibt und notwendige Signale überträgt.

Dadurch kann eine Erhöhung des umrichterbasierenden Erzeugungsanteils in Verbundnetzen berücksichtigt werden. Die vorgeschlagene Lösung unterstützt auch ein Regelungskonzept für Netze, welche zeitweise fast vollständig durch umrichtergekoppelte Einspeisung betrieben werden, bei Aufrechterhaltung der Systemsicherheit.

Es wurde erkannt, dass es vorteilhaft wäre, wenn ein Windpark zukünftig folgende Informationen oder zumindest ein Teil davon, mit dem Netzbetreiber in einer Netzwiederaufbausituation austauschen könnte:
1. zuletzt eingespeiste Leistung und Status des Windparks
2. prognostizierte Leistung für die nächsten 6 Stunden
3. Information, über die der Netzbetreiber muss den Windpark in einen Netzwiederaufbaumodus versetzen kann.
4. Information, über die der Netzbetreiber vom Windpark abzugebende Wirkleistung steuert kann, wobei bspw. eine Auswahl zwischen den Werten 0 %, 30 %, 60 %, 90 % getroffen werden kann.
5. Information, über die der Netzbetreiber Parameter für Blindleistung verstellen kann, insbesondere die Parameter Spannungssollwert, Blindleistungssollwert und/oder cos(Phi).

Gemäß wenigstens einer Ausführungsform der Erfindung wird eine Aufteilung in zwei Kommunikationswege vorgeschlagen, nämlich besonders:
1. Eine ausfallsichere bidirektionale Kommunikation zwischen Windparkleitwarte und Netzleitstelle. Die Netzleitstelle ist besonders von einem Netzbetreiber und/oder einem Übertragungsnetzbetreiber betreibbar
   Diese bidirektionale Kommunikation kann als Leitwartenverbindung bezeichnet werden. Vorzugsweise ist sie als Standleitung zur Übertragung von Daten und Sprache ausgebildet und ist ausfallsicher auch bei Netztotalausfall.
2. Eine ausfallsichere unidirektionale Kommunikation zwischen Netzbetreiber und Windpark. Diese unidirektionale Kommunikation kann als Windparkverbindung bezeichnet werden. Sie ist vorzugsweise als Niedergeschwindigkeitskommunikation ausgebildet und hat eine Datenrate von wenigen Bit pro Sekunde. Als Datenrate wird hierbei maximal 8 Bytes pro Sekunde, vorzugsweise von maximal einem Byte pro Sekunde und insbesondere von maximal einem Bit pro Sekunde, insbesondere nicht mehr als 20 Bits pro Sekunde (Bit/s) angesehen.

Die Datenübertragung kann bspw. über bekannte Rundsteuersignale erfolgen, oder unter Verwendung eines einfachen GSM oder einer anderen Funkverbindung. Es kommt auch in Betracht, eine ausfallsichere Schnittstelle eines bekannten Einspeisemanagmentsystems zu verwenden. Eine solche Schnittstelle ist auch unter dem Begriff EISMAN-Schnittsteile bekannt.

Weiterhin wir ein kontinuierliches Vorhalten eines Datensatzes für alle Windparks, vorgeschlagen, wobei der Netzbetreiber diesen Datensatz bei Bedarf über eine ausfallsichere Verbindung abrufen kann. Alternativ wird dazu vorgeschlagen, dass: solche Daten bzw. ein solcher Datensatz kontinuierlich beim Netzbetreiber liegen, besonders in einer Netzleitstelle.

Ein solcher zweiter, sehr einfacher unidirektionaler Kommunikationsweg erlaubt Steuerung der Windparks durch den Netzbetreiber.

Es wurde erkannt, dass sich besonders die folgenden Vorteile ergeben können. Die Datenverbindung mit einem größeren Datenbedarf muss nur einmal vorgesehen werden. Die Schnittstelle zu den Windparks kann sehr einfach gestaltet werden.

Eine solche vorgeschlagene Kommunikationsstruktur kann vorteilhaft eingesetzt werden. Bei einer Netzwiederaufbausituation holt sich als erstes der Netzbetreiber durch seine Netzleitstelle die Daten bei der Windparkleitwarte ab.

Nach einem Fehlerfall und nachdem der Netzbetreiber, besonders durch die Netzleitstelle, wieder eine Netzspannung zum Windpark geschaltet hat, kann zu einem entsprechenden Windpark die konventionelle Kommunikation, besonders über DSL, u.U. nicht Verfügbar sein.

Der Netzbetreiber kann dann aber über eine sehr einfache Schnittstelle den Windpark in den Netzwiederaufbaumodus versetzen. Dabei kann besonders eine Aktivierung einer Vorhalteleistung, einer frequenzabhängigen Leistungsregelund und eine gradientenfeste Regelung und auch eine spannungsabhängigen Blindleistungsregelung durchgeführt werden. Über diese Schnittstelle kann der Netzbetreiber somit eine Leistungssteuerung durchführen um das Netz wieder hochzufahren.

Durch die Kenntnis der verfügbaren Leistung in Kombination mit der Leistungssteuerung kennt der Netzbetreiber dann das Verhalten der Windparks und kann das Netz mit der Unterstützung des Windparks oder mehrerer Windparks sehr schnell hochfahren.

Zusätzlich kann diese Schnittstelle auch für die Blindleistungssteuerung verwendet werden, indem darüber ein Spannungssollwert oder ein Blindleistungssollwert übertragen wird, nämlich über die Windparkverbindung.

Es kommen grundsätzlich folgende Kommunikationsarten in Betracht:
Eine so genannte PLC-Kommunikation, die auch als Punkt zu Punkt Power Line Comunication bezeichnet werden kann. Die Verwendung bekannter Rundsteuersignale, die unidirektional arbeiten. Eine Übertragung per Funk und/oder eine Einkopplung in eine vorhandene Leitung kommt in Betracht.

Auch andere Funkverbindungen, besonders die Verwendung von Telefonnetzbetreibern und/oder ein GSM kommen in Betracht.

## Patentansprüche

1. Verfahren zum Steuern eines Netzwiederaufbaus eines elektrischen Versorgungsnetzes (120), wobei das elektrische Versorgungsnetz (120)
- einen ersten Netzabschnitt (302) und wenigstens einen weiteren Netzabschnitt (302) aufweist,
- an den ersten Netzabschnitt (302) wenigstens ein Windpark (304) angeschlossen ist,
- der Windpark (304) über eine Windparkleitwarte (320) ansteuerbar ist,
- der erste Netzabschnitt (302) über wenigstens eine Schalteinrichtung (340) mit dem wenigstens einen weiteren Netzabschnitt (342) gekoppelt ist, um elektrische Energie zwischen den Netzabschnitten (302, 342) zu übertragen,
- die wenigstens eine Schalteinrichtungen (340) dazu eingerichtet ist, in einem Fehlerfall den ersten Netzabschnitt (302) von dem wenigstens einen weiteren Netzabschnitt (342) zu trennen,
- eine Netzleitstelle vorgesehen ist, um die wenigstens eine Schalteinrichtung (342) zu steuern,
wobei in einem Fehlerfall, in dem ein auf den ersten Netzabschnitt (302) wirkender Netzfehler auftritt,
- der erste Netzabschnitt (302) durch die wenigstens eine Schalteinrichtung (340) von dem wenigstens einen weiteren Netzabschnitt (342) getrennt wird,
- die Windparkleitwarte (320) mit der Netzleitstelle (324) über eine Leitwartenverbindung (326) Daten austauscht, wobei die Leitwartenverbindung (326) eine ausfallsichere Kommunikationsverbindung zwischen der Windparkleitwarte (320) und der Netzleitstelle (324) ist und unabhängig von dem elektrischen Versorgungsnetz (120) betreibbar ist, insbesondere auch bei dem Fehler im ersten Netzabschnitt (302) betreibbar ist, und
- der Windpark (304) Daten von der Netzleitstelle (324) über eine Windparkverbindung (328) erhält, wobei die Windparkverbindung (328) eine ausfallsichere Kommunikationsverbindung zwischen dem Windpark (304) und der Netzleitstelle (324) ist und unabhängig von dem elektrischen Versorgungsnetz (120) betreibbar ist, insbesondere auch bei dem Fehler im ersten Netzabschnitt (302) betreibbar ist, und
- weitere Daten, die nicht über die Leitwartenverbindung (326) und nicht über die Windparkverbindung (328) übertragen werden, über eine weitere Datenverbindung (322, 332) übertragen werden, sofern diese nicht ausgefallen ist.

2. Verfahren nach Anspruch 1,
**dadurch gekennzeichnet, dass**
- der Windpark (304) in dem Fehlerfall von der Netzleistelle (324) über die Windparkverbindung (328) in einen Netzwiederaufbaumodus versetzt wird, wenn der Netzfehler behoben ist oder behoben wird und/oder, dass
- die Netzleitstelle (324) eine Wirkleistungserzeugung und/oder -abgabe des Windparks (304) steuert, insbesondere durch Übertragen von Wirkleistungssollwerten über die Windparkverbindung (328) an den Windpark (304).

3. Verfahren nach einem der vorstehenden Ansprüche,
**dadurch gekennzeichnet, dass**
die Windparkleitwarte (320) der Netzleitstelle (324) wenigstens eine Information überträgt aus der Liste aufweisend
- einen Wert über eine Höhe unmittelbar vor dem Fehlerfall von dem Windpark (304) erzeugter und/oder in den ersten Netzabschnitt (302) eingespeister Wirkleistung, und
- eine Wirkleistungsprognose, die einen Wert oder zeitlichen Verlauf einer erzeugbaren Leistung für einen vorbestimmten Prognosezeitraum angibt, wobei der vorbestimmte Prognosezeitraum insbesondere einen Zeitraum vom aktuellen Zeitpunkt bis zu einem etwa 2 bis 8 Stunden, insbesondere etwa 4 bis 6 Stunden in der Zukunft liegenden Zeitpunkt beschreibt, wobei
die wenigstens eine Information insbesondere über die Leitwartenverbindung (326) übertragen wird.

4. Verfahren nach einem der vorstehenden Ansprüche,
**dadurch gekennzeichnet, dass**
die Netzleitstelle (324) zum Windpark (304) wenigstens eine Information über die Windparkverbindung (328) überträgt aus der Liste aufweisend
- ein Signal zum Starten eines Netzwiederaufbaumodus,
- einen Wirkleistungssollwert zum Vorgeben einer von dem Windpark in den ersten Netzabschnitt (302) einzuspeisenden Wirkleistung,
- einen Blindleistungssollwert zum Vorgeben einer von dem Windpark (304) in den ersten Netzabschnitt (302) einzuspeisenden Blindleistung und
- einen Spannungssollwert zum Vorgeben einer von dem Windpark (304) am ersten Netzabschnitt (302) zu regelnden Netzspannung.

5. Verfahren nach einem der vorstehenden Ansprüche,
**dadurch gekennzeichnet, dass**
die Windparkleitwarte (320) mit einer Windprognoseeinrichtung (330) verbunden ist, insbesondere über eine Prognoseübertragungsverbindung (332), und Windprognosewerte, insbesondere eine prognostizierte mittlere Windgeschwindigkeit, von der Windprognoseeinrichtung (330) erhält und zwischenspeichert, um daraus ggf. eine bzw. die Wirkleistungsprognose zu berechnen.

6. Verfahren nach einem der vorstehenden Ansprüche,
**dadurch gekennzeichnet, dass**
- die Windparkverbindung (328) unidirektional ausgebildet ist und nur Daten in der Richtung von der Netzleitstelle (324) zum Windpark (304) übertragen werden und/oder dass die Windparkverbindung (328) eine geringe Bandbreite oder Übertragungsrate aufweist, insbesondere von maximal 8 Bytes pro Sekunde, vorzugsweise von maximal einem Byte pro Sekunde und insbesondere von maximal einem Bit pro Sekunde und/oder dass
- die Leitwartenverbindung (326) bidirektional ausgebildet ist und Daten zwischen der Netzleitstelle (324) und der Windparkleitwarte (320) in beide Richtungen übertragen werden.

7. Verfahren nach einem der vorstehenden Ansprüche,
**dadurch gekennzeichnet, dass**
Daten zum Steuern des Windparks (304) in der Netzleitstelle (324) hinterlegt sind, oder in der Windparkleitwarte (320) hinterlegt sind und im Fehlerfall über die Leitwartenverbindung (326) zur Netzleitstelle (324) übertragen werden können, wobei die Daten ausgewählt sind aus der Liste aufweisend
- eine Wirkleistungsprognose,
- eine Windgeschwindigkeitsprognose,
- Kenndaten des Windparks (304), insbesondere Nennleistung, Nennblindleistung und/oder Leistungsgrenzgradienten, die eine maximale Wirkleistungsänderung des Windparks (304) angeben und
- eine verfügbare Wirkleistung des Windparks (304).

8. Verfahren nach Anspruch 7,
**dadurch gekennzeichnet, dass**
einige, mehrere oder alle der hinterlegten Daten häufig, insbesondere kontinuierlich aktualisiert werden.

9. Verfahren nach einem der vorstehenden Ansprüche,
**dadurch gekennzeichnet, dass**
in dem Fehlerfall der Windpark (304) in einen Netzwiederaufbaumodus versetzt wird und der Windpark (304) in dem Netzwiederaufbaumodus einen, mehrere oder alle der folgenden Schritte ausführt:
- Aktivieren einer Vorhalteleistung, wobei die Vorhalteleistung eine Leistung ist, die der Windpark (304) auf ein Anforderungssignal in den ersten Netzabschnitt (302) einspeisen kann,
- Einspeisen elektrischer Wirkleistung in Abhängigkeit einer Frequenz der elektrischen Spannung in dem ersten Netzabschnitt (302), während der Netzwiederaufbaumodus eine frequenzabhängige Wirkleistungsregelung vorschreibt,
- Einspeisen elektrischer Wirkleistung unter Einhaltung eines dem Betrage nach begrenzten Leistungsgradienten, der eine Änderung der Wirkleistung in Abhängigkeit der Zeit beschreibt, während der Netzwiederaufbaumodus eine gradientenfeste Wirkleistungsregelung vorschreibt, und
- Einspeisen elektrischer Blindleistung in Abhängigkeit einer Spannung in dem ersten Netzabschnitt, während der Netzwiederaufbaumodus eine spannungsabhängige Blindleistungseinspeisung vorschreibt.

10. Kommunikationsvorrichtung (300) zum Steuern eines Netzwiederaufbaus eines elektrischen Versorgungsnetzes (120), wobei das elektrische Versorgungsnetz (120)
- einen ersten Netzabschnitt (302) und wenigstens einen weiteren Netzabschnitt (342) aufweist,
- an den ersten Netzabschnitt (302) wenigstens ein Windpark (304) angeschlossen ist,
- der Windpark (304) über eine Windparkleitwarte (320) ansteuerbar ist,
- der erste Netzabschnitt (302) über wenigstens eine Schalteinrichtung (340) mit dem wenigstens einen weiteren Netzabschnitt (342) gekoppelt ist, um elektrische Energie zwischen den Netzabschnitten (302, 342) zu übertragen,
- die wenigstens eine Schalteinrichtungen (340) dazu eingerichtet ist, in einem Fehlerfall den ersten Netzabschnitt (302) von dem wenigstens einen weiteren Netzabschnitt (342) zu trennen,
- eine Netzleitstelle (324) vorgesehen ist, um die wenigstens eine Schalteinrichtung (340) zu steuern,
wobei für einen Fehlerfall, in dem ein auf den ersten Netzabschnitt (302) wirkender Netzfehler auftritt, vorgesehen ist, dass der erste Netzabschnitt (302) durch die Schalteinrichtung (340) von dem wenigstens einen weiteren (342) Netzabschnitt getrennt wird, und die Kommunikationseinrichtung (300) umfasst:
- eine Leitwartenverbindung (326), dazu vorbereitet, dass darüber die Windparkleitwarte (320) mit der Netzleitstelle (324) Daten austauscht, wobei
- die Leitwartenverbindung (326) eine ausfallsichere Kommunikationsverbindung zwischen der Windparkleitwarte (320) und der Netzleitstelle (324) ist und
- unabhängig von dem elektrischen Versorgungsnetz (120) betreibbar ist, insbesondere auch bei dem Fehler im ersten Netzabschnitt (302) betreibbar ist, und
- eine Windparkverbindung (328), dazu vorbereitet, das darüber der Windpark (304) Daten von der Netzleitstelle (324) erhält, wobei
- die Windparkverbindung (328) eine ausfallsichere Kommunikationsverbindung zwischen dem Windpark 304) und der Netzleitstelle (324) ist und
- unabhängig von dem elektrischen Versorgungsnetz (120) betreibbar ist, insbesondere auch bei dem Fehler im ersten Netzabschnitt (302) betreibbar ist, und
- eine weitere Datenverbindung (322), insbesondere eine Windparkverbindung (322), zwischen dem Windpark (304) und der Windparkleitwarte (320) angeordnet ist, dazu vorbereitet, weitere Daten zu übertragen, die nicht über die Leitwartenverbindung (326) und nicht über die Windparkverbindung (328) übertragen werden.

11. Kommunikationsvorrichtung (300) nach Anspruch 10,
**dadurch gekennzeichnet, dass**
sie wenigstens eine mehrere oder alle Einrichtungen umfasst, die ausgewählt sind aus der Liste ausweisend
- die Windparkleitwarte (320),
- die Netzleitstelle (324),
- eine Windparksteuereinrichtung (316) des Windparks (304) und
- eine Windprognoseeinrichtung (330) zum Erstellen einer Windprognose.

12. Kommunikationsvorrichtung (300) nach Anspruch 10 oder 11,
**dadurch gekennzeichnet, dass**
- sie dazu vorbereitet ist, ein Verfahren nach einem der Ansprüche 1 bis 9 durchzuführen, und/oder dass
- die Windparkverbindung (328) unidirektional ausgebildet ist und dazu vorbereitet ist, dass nur Daten in der Richtung von der Netzleitstelle (324) zum Windpark (304) übertragen werden und/oder dass die Windparkverbindung (328) eine geringe Bandbreite oder Übertragungsrate aufweist, insbesondere von maximal 8 Bytes pro Sekunde, vorzugsweise von maximal einem Byte pro Sekunde und insbesondere von maximal einem Bit pro Sekunde.

13. Kommunikationsvorrichtung (300) nach einem der Ansprüche 10 bis 12,
**dadurch gekennzeichnet, dass**
die Leitwartenverbindung (326) bidirektional ausgebildet ist und dazu vorbereitet ist, dass Daten zwischen der Netzleitstelle (324) und der Windparkleitwarte (320) in beide Richtungen übertragen werden.

14. Windpark (304) mit einer zentralen Windparksteuereinrichtung (316), die dazu vorbereitet ist, über eine unidirektionale Windparkverbindung (328) Daten von einer Netzleitstelle (324) zu empfangen.

15. Windpark (304) nach Anspruch 14,
**dadurch gekennzeichnet, dass**
die zentrale Windparksteuereinrichtung (316) dazu vorbereitet ist, in einer Kommunikationsvorrichtung (300) nach einem der Ansprüche 10 bis 13 eingebunden zu werden.
